# EUROPÄISCHE PATENTSCHRIFT

(11) **EP 1 233 845 B1**
(45) Veröffentlichungstag und Bekanntmachung des Hinweises auf die Patenterteilung: **03.03.2004**
(21) Anmeldenummer: 00975661.0
(22) Anmeldetag: 08.11.2000
(51) Int. Cl.: B23K 9/127

(54) **VERFAHREN UND VORRICHTUNG ZUM POSITIONIEREN EINES SCHWEISSBRENNERS IM MITTEL EINES SCHWEISSNAHTSOLLVERLAUFES**
METHOD AND DEVICE FOR POSITIONING A WELDING TORCH IN THE CENTER-LINE OF THE DESIRED COURSE OF A WELD SEAM
PROCEDE ET DISPOSITIF DE POSITIONNEMENT D'UN CHALUMEAU DE SOUDAGE AU CENTRE DU TRACE THEORIQUE D'UN CORDON DE SOUDURE

(30) Priorität: 08.11.1999 AT 188799
(43) Veröffentlichungstag der Anmeldung: 28.08.2002
(73) Patentinhaber: Fronius International GmbH, 4643 Pettenbach (AT)
(72) Erfinder: BRUNNER, Michael, A-8055 Seiersberg (AT); ARTELSMAIR, Josef, A-4552 Wartberg/Krems (AT)
(74) Vertreter: Secklehner, Günter, Dr.
(86) Internationale Anmeldenummer: PCT/AT2000/000293
(87) Internationale Veröffentlichungsnummer: WO 2001/034336

(56) Entgegenhaltungen:
- DE-A- 3 545 505
- DE-U- 29 816 729
- GB-A- 2 268 009
- US-A- 4 249 062
- US-A- 5 780 808
- GEORGE E.COOK: "Robotic arc welding: research in sensory feedback control" IEEE TRANSACTIONS ON INDUSTRIAL ELECTRONICS, Bd. IE, Nr. 30, August 1983 (1983-08), Seiten 252-268, XP002163532 New-york USA

## Beschreibung

Die Erfindung betrifft ein Verfahren zum Positionieren eines Schweißbrenners bzw. eines Schweißdrahtes im Mittel eines Schweißnahtsollverlaufes und einem Verfahren zum Feststellen eines Kurzschlusses zwischen Schweißdraht und Werkstück nach Beendigung eines Schweißprozesses sowie ein Schweißgerät oder eine Schweißanlage für eine Roboteranwendung, wie in den Oberbegriffen der Ansprüchen 1, 8 und 10 beschrieben.

Aus der US 4 249 062 A , die als nächstliegender Stand der Technik angesehen wird, ist ein Verfahren bekannt, bei dem durch das Aktivieren einer Subroutine ein Schaltelement von einer Steuervorrichtung angesteuert wird, wodurch eine Umschaltung von einer Energiequelle bzw. Schweißstromquelle auf eine weitere Energiequelle bzw. Spannungsquelle erfolgt. Mit dieser Energiequelle wird anschließend mittels der Subroutine das Positionierverfahren zur Ermittlung der Nahtmitte ausgeführt. Nach Beendigung der Subroutine wird das Schaltelement wiederum umgeschaltet, sodass nunmehr mit der Schweißstromquelle ein Schweißprozess durchgeführt werden kann. Nachteilig ist hierbei, dass für die Ermittlung der Koordinaten der Naht eine zusätzliche Stromquelle und ein Schaltelement benötigt wird, wobei je nach durchzuführendem Prozess eine Umschaltung zwischen den beiden Energiequellen erfolgt.

Aus der DE 35 45 505 A1 ist ein Verfahren und eine Vorrichtung zum Positionieren eines Schweißbrenners im Mittel einer Naht bekannt, wobei der Schweißbrenner durch einen Roboterarm auf einer vorgegebenen bzw. programmierten Nahtmitte positioniert wird, worauf ein Abgleichverfahren durchgeführt wird. Dabei wird der Schweißbrenner durch den Roboterarm in eine Richtung bewegt, bis ein Kurzschluß zwischen dem Schweißbrenner, insbesondere einer Gasdüse, und einer Nahtflanke des Werkstückes auftritt, worauf der Schweißbrenner in entgegengesetzter Richtung bis zum Auftreten eines weiteren Kurzschlusses zwischen dem Schweißbrenner, insbesondere der Gasdüse, und dem Werkstück vom Roboterarm bewegt wird. Anschließend wird von einer Steuervorrichtung durch Auswertung des Verschiebungsweges eine Nahtmitte berechnet, auf die der Schweißbrenner durch den Roboterarm positioniert wird. Das mechanische Konturentasten am Werkstück erfolgt durch Kontaktfühlung der benachbarten Nahtflanken des Nahtbezugspunktes eines Werkstückes, wobei der rechnerischen Ermittlung der Koordinaten des Nahtwurzelpunktes aus diesen Daten bzw. aus dem Verschiebungsweg erfolgt. Hierzu ist der Schweißbrenner schwenkbar am Roboterarm gelagert und mit einer Schaltscheibe versehen, die bei Berührung der Nahtflanke durch Auslenkung des Schweißbrennerrohres vom Schweißbrenner abhebt und ein Schaltsignal an die Steuervorrichtung übergibt.

Nachteilig ist hierbei, daß für eine mechanische Koordinatenermittlung der Schweißbrenner speziell ausgebildet werden muß und somit nicht jeder Schweißbrenner einsetzbar ist.

Weiters ist aus der DE 298 16 729 U1 ein Verfahren und eine Vorrichtung zur mechanischen Bestimmung der Koordinaten einer Nahtmitte bekannt, bei der von einer Steuervorrichtung eine Hilfsstromquelle aktiviert wird. Die Leistung der Hilfsstromquelle ist derartig definiert, daß bei einem Kurzschluß zwischen dem Schweißdraht und dem Werkstück bzw. der Nahtflanke beim ausführen eines Abgleichverfahrens kein Lichtbogen gezündet wird. Die Ermittlung der Koordinaten erfolgt wiederum durch entsprechende Links- und Rechtsbewegung des Schweißbrenners bzw. des Schweißdrahtes, wobei bei Auftreten eines Kurzschlusses zwischen dem Schweißdraht und dem Werkstück nunmehr eine Schaltvorrichtung, insbesondere ein Relais, aktiviert wird und somit über dem mit der Schaltvorrichtung gekoppelten Schaltelement der Steuervorrichtung mitgeteilt wird, daß ein Kurzschluß aufgetreten ist. Daraufhin wird die Bewegung des Schweißbrenners bzw. des Schweißdrahtes in die entgegengesetzte Richtung durchgeführt. Damit ist es wiederum möglich, die Koordinaten der Nahtmitte zu berechnen.

Nachteilig ist hierbei, daß für die Ermittlung der Koordinaten der Naht eine zusätzliche Hilfsstromquelle benötigt wird, die als Zusatzgerät zu einem Schweißgerät ausgebildet ist und somit für die Koppelung mit dem Schweißgerät eine zusätzliche Schaltvorrichtung benötigt wird.

Der Erfindung liegt die Aufgabe zugrunde, ein Verfahren zum Positionieren eines Schweißbrenners bzw. eines Schweißdrahtes im Mittel eines Schweißnahtsollverlaufes und ein Verfahren zum Feststellen eines Kurzschlusses zwischen Werkstück und Schweißdraht nach Beendigung eines Schweißprozesses sowie ein Schweißgerät oder eine Schweißanlage für eine Roboteranwendung zu schaffen, bei dem ohne zusätzliche Geräte oder Komponenten das Auslangen gefunden wird.

Die Aufgabe der Erfindung wird durch die Maßnahmen im Kennzeichenteil des Anspruches 1 gelöst. Vorteilhaft ist hierbei, daß durch entsprechende Ansteuerung des Leistungsteiles des Schweißgerätes die Ausgangsleistung derartig reduziert werden kann, daß bei Berührung des Schweißdrahtes mit dem Werkstück keine Zündung des Lichtbogens erfolgt und somit zusätzlich Geräte bzw. Komponenten, wie beispielsweise eine Hilfsstromquelle, nicht erforderlich sind. Ein weiterer Vorteil liegt darin, daß der Benutzer bzw. Schweißer durch einfaches Aktivieren einer Funktion eine selbständige Ansteuerung des Leistungsteils durchführen kann, wobei jedoch die bereits eingestellten Schweißparameter für den Schweißprozeß nicht verloren gehen und somit nach dem Abgleichverfahren der Schweißprozeß gestartet werden kann. Ein Vorteil liegt auch darin, daß durch die Reduzierung der Ausgangsleistung des Leistungsteils, insbesondere einer Brückenschaltung, die Pulsweite bei Auftreten eines Kurzschlusses bereits derart gering ist, daß eine unvorhergesehene Zündung bzw. Bildung eines Lichtbogens vermieden wird. Die Versorgung eines Sekundärkreises wird dabei derart durchgeführt, daß die durch die Bauelemente entstehenden Verlustleistungen kompensiert wird und nur eine geringe Ladung der an den Ausgangsklemmen angeordneten Entstör- und/oder Ableitkondensatoren bereitgestellt wird.

Dadurch kann sichergestellt werden, daß nur eine geringe Energiemenge für die Erkennung einer Widerstandsänderung bzw. eines Kurzschlusses zur Verfügung gestellt wird. Ein weiterer wesentlicher Vorteil liegt darin, daß diese Art der Ansteuerung des Leistungsteils durch entsprechende Software-Programme erfolgt und somit ein einfaches Nachrüsten älterer Schweißgeräte durch ein Software-Update möglich ist.

Weitere vorteilhafte Ausgestaltungen sind in den Ansprüchen 2 bis 7 beschrieben. Die sich daraus ergebenden Vorteile sind aus der Beschreibung zu entnehmen.

Weiters wird die Aufgabe der Erfindung durch die Maßnahmen im Kennzeichenteil des Anspruches 8 gelöst. Vorteilhaft ist hierbei, daß durch die Minimierung der Ausgangsleistung zur Überprüfung einer Widerstandsänderung bzw. eines Kurzschlusses nach dem Schweißprozeß keine Schäden an dem Werkstück bzw. dem Schweißdraht verursacht werden, da eine Zündung eines Lichtbogens unterbunden wird bzw. nicht möglich ist. Ein weiterer Vorteil liegt darin, daß durch die minimale Ausgangsleistung für einen Überprüfungsprozeß keine Menschen, die am Schweißbrenner oder am Werkstück arbeiten, gefährdet werden können.

Eine weitere Form der Ausgestaltung ist im Anspruch 9 beschrieben, der sich daraus ergebende Vorteil ist der Beschreibung zu entnehmen.

Die Aufgabe der Erfindung wird auch durch die Ausgestaltung im Kennzeichenteil des Anspruches 10 gelöst. Vorteilhaft ist hierbei, daß durch einfaches Einstellen bzw. Aktivieren einer Funktion bzw. eines Schweißparameters eine eigenständige Steuerung des Leistungsteils von der Steuervorrichtung eingeleitet wird. Dabei ist eine Nachrüstung bzw. Umrüstung bestehender Schweißgeräte für eine derartige Funktion einfach möglich, da keinerlei hardwaremäßige Änderungen durchgeführt werden müssen, sondern durch ein einfaches Software-Update dies erreicht werden kann.

Eine weitere Form der Ausgestaltung ist im Anspruch 11 beschrieben, der sich daraus ergebende Vorteil ist der Beschreibung zu entnehmen.

Die Erfindung wird anschließend durch Ausführungsbeispiele näher beschrieben.

Es zeigen:
- Fig. 1: eine schematische Darstellung einer Schweißmaschine bzw. eines Schweißgerätes, in vereinfachter, Darstellung;
- Fig. 2: eine schaubildliche Darstellung einer Roboteranwendung mit dem erfindungsgemäßen Schweißgerät, in vereinfachter, schematischer Darstellung;
- Fig. 3: ein Blockschaltbild des Schweißgerätes, in vereinfachter, schematischer Darstellung.

Einführend wird festgehalten, daß gleiche Teile der einzelnen Ausführungsbeispiele mit gleichen Bezugszeichen versehen werden. Die in den einzelnen Ausführungsbeispielen angegebenen Lageangaben sind bei einer Lageänderung sinngemäß auf die neue Lage zu übertragen.

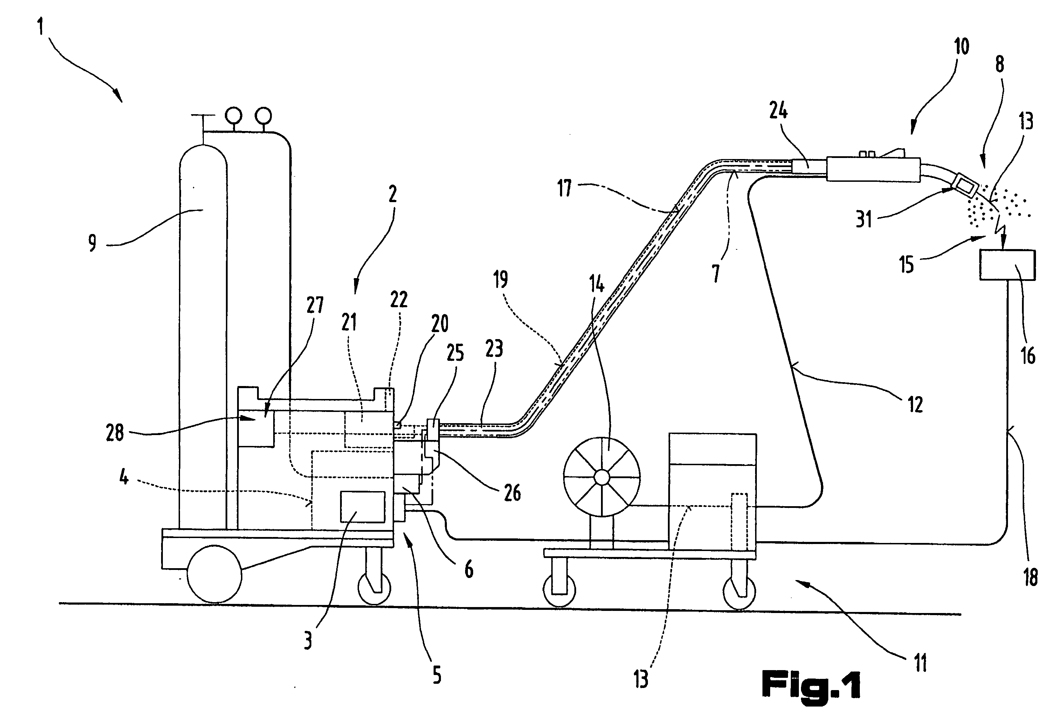

In Fig. 1 ist eine Schweißanlage bzw. ein Schweißgerät 1 für verschiedenste Schweißverfahren, wie z.B. MIG/MAG-Schweißen bzw. TIG-Schweißen oder Elektroden-Schweißverfahren, gezeigt.

Das Schweißgerät 1 umfaßt eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Schweißdraht 13 von einer Vorratstrommel 14 in den Bereich des Schweißbrenners 10 zugeführt wird. Selbstverständlich ist es möglich, daß das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Der Strom zum Aufbauen eines Lichtbogens 15 zwischen dem Schweißdraht 13 und einem Werkstück 16 wird über eine Schweißleitung 17 vom Leistungsteil 3 der Stromquelle 2 dem Schweißbrenner 10 bzw. dem Schweißdraht 13 zugeführt, wobei das zu verschweißende Werkstück 16 über eine weitere Schweißleitung 18 ebenfalls mit dem Schweißgerät 1, insbesondere mit der Stromquelle 2, verbunden ist und somit über dem Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet werden und somit eine Kühlung des Schweißbrenners 10 bzw. des Schweißdrahtes bewirkt werden kann.

Das Schweißgerät 1 weist weiters eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 eingestellten Schweißparameter an die Steuervorrichtung 4 weitergeleitet und von dieser werden anschließend die einzelnen Komponenten der Schweißanlage bzw. des Schweißgerätes 1 angesteuert.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine zum Stand der Technik zählende Verbindungsvorrichtung 24 mit dem Schweißbrenner 10 verbunden, wogegen die einzelnen Leitungen im Schlauchpaket 23 mit den einzelnen Kontakten des Schweißgerätes 1 über Anschlußbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden.

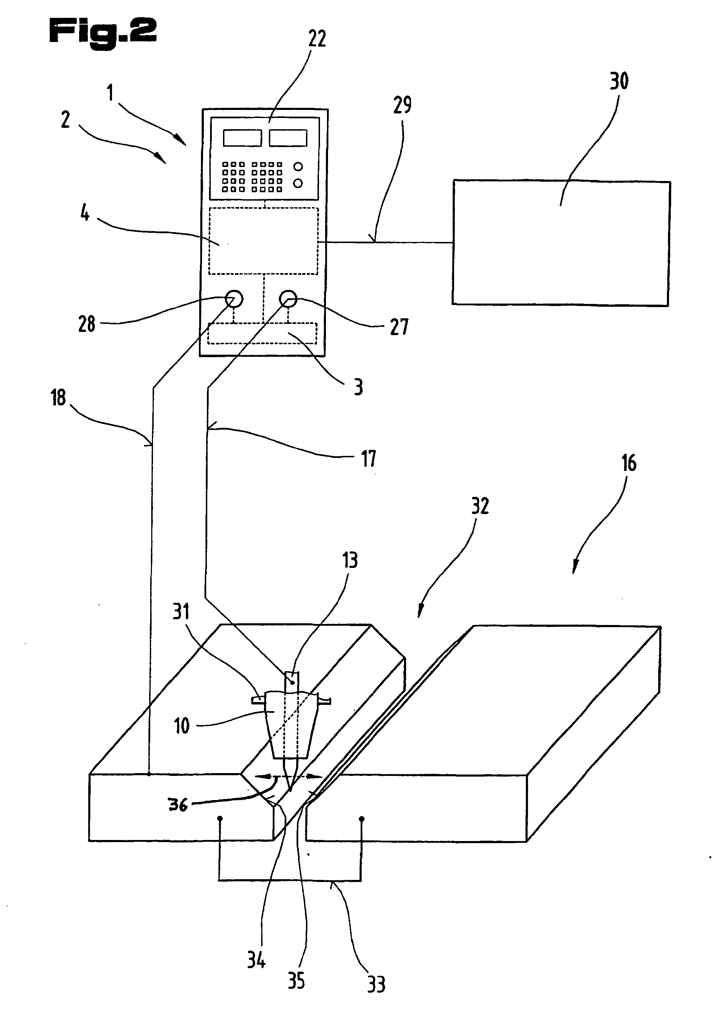

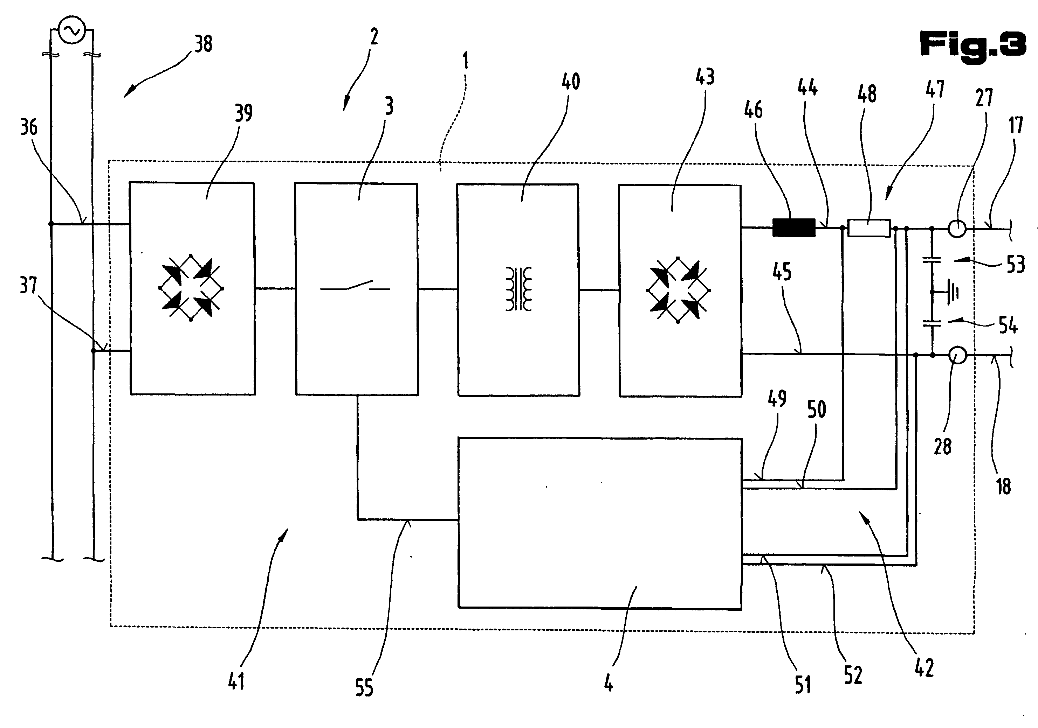

In den Fig. 2 und 3 ist ein schematischer Aufbau einer Schweißanlage mit dem Schweißgerät 1 und einer Roboteranwendung, insbesondere einem Schweißroboter, welche der Übersicht halber nur schematisch angedeutet ist, und ein Blockschaltbild des Schweißgerätes 1 dargestellt. Das gezeigte Schweißgerät 1 weist die einzelnen Komponenten, wie sie in Fig. 1 beschrieben sind, auf. Hierzu wurde in Fig. 2 schematisch eingezeichnet, daß die Steuervorrichtung 4 mit dem Leistungsteil 3 für den Schweißprozeß und der Ein und/oder Ausgabevorrichtung 22 verbunden ist, sodaß eine Eingabe und Steuerung bzw. Regelung eines Schweißprozesses durchgeführt werden kann.

Das Leistungsteil 3 des Schweißgerätes 1, welches bevorzugt durch eine Stromquelle 2, insbesondere einer Inverterstromquelle, gebildet ist, ist dabei mit Ausgangsklemmen 27, 28 verbunden, an die die Schweißleitungen 17, 18 für die Energieversorgung des Schweißbrenners 10, insbesondere des Schweißdrahtes 13, angeschlossen sind. Dabei wird für den Aufbau eines Stromkreises für einen Schweißprozesses der schematisch dargestellte Schweißbrenner 10, insbesondere der Schweißdraht 13, mit der Schweißleitung 17 und das Werkstück 16 mit der Schweißleitung 18 verbunden, wodurch es möglich, daß der Lichtbogen 15 zwischen dem Schweißdraht 13 und dem Werkstück 16 durch das Leistungsteil 3 durch Beaufschlagen mit Energie gezündet und somit ein Schweißprozeß durchgeführt bzw. eine Schweißraupe gebildet werden kann. Auf das Zündverfahren sowie die Steuerung und Regelung eines Schweißprozesses wird nicht näher eingegangen, da alle aus dem Stand der Technik bekannten Verfahren eingesetzt werden können.

Weiters ist das Schweißgerät 1 über eine Leitung 29 mit einer schematisch dargestellten Robotersteuerung 30 verbunden. Dabei ist es möglich, daß sämtliche aus dem Stand der Technik bekannten Verbindungsmöglichkeiten, wie beispielsweise einem Feldbus, eine Lichtwellenleiterverbindung usw., eingesetzt werden können, wobei über die Leitung 29 ein bidirektionaler Datenaustausch durchgeführt wird. Die Robotersteuerung 30 hat die Aufgabe, die Steuerung der einzelnen Komponenten, wie beispielsweise einen Roboterarm, einen Roboterkopf 31 bzw. einen Manipulator usw., wie schematisch angedeutet, durchzuführen.

Erfindungsgemäß ist nunmehr vorgesehen, daß ein Verfahren zum Positionieren des Schweißbrenners 10 bzw. des Schweißdrahtes 13 im Mittel einer Naht 32 mit dem Schweißgerät 1 durch ein mechanisches Abgleichverfahren durchgeführt wird, dazu aber keine zusätzlichen hardwaremäßigen Komponenten erforderlich sind. Dabei wird der Schweißbrenner 10 durch einen Roboterarm auf einer vorgegebenen bzw. programmierten Stellung zwischen zwei Nahtflanken, wie in Fig. 2 dargestellt, positioniert. Das anschließend beschriebene Abgleichverfahren wird nur kurz erläutert, da dieses bereits aus dem Stand der Technik bekannt ist und beispielsweise im Detail aus der DE 298 16 729 U 1 und der DE 35 45 505 A1 entnommen werden kann. Dieses Abgleichverfahren beruht dabei auf einer mechanischen Positionsermittlung einer Nahtmitte der Naht 32, welche schematisch am Werkstück 16 dargestellt ist.

Bei dem dargestellten Ausführungsbeispiel wird das Werkstück 16 jedoch aus zwei unabhängigen Einzelteilen gebildet, sodaß es notwendig ist, daß zwischen den beiden Einzelteilen eine elektrische Leitungsverbindung 33 hergestellt werden muß.

Bei dem mechanischen Abgleichverfahren ist für die Ermittlung der Nahtmitte eine Zusammenarbeit des Schweißgerätes 1 mit der Robotersteuerung 30 erforderlich, da die Ansteuerung der Komponenten des Roboters nicht direkt vom Schweißgerät 1 aus möglich ist. Selbstverständlich ist es möglich, die Steuerung des Abgleichverfahrens vom Schweißgerät 1, insbesondere von der Steuervorrichtung 4, durchzuführen, wobei dann sichergestellt sein muß, daß die Steuervorrichtung 4 des Schweißgerätes 1 die Steuerung der Roboterkomponenten übernehmen kann.

Bei dem mechanischen Abgleichverfahren wird der Schweißbrenner 10 durch den Roboterarm nach der Positionierung im Bereich der Naht 32 in eine Richtung bewegt, bis eine Widerstandsänderung, insbesondere ein Kurzschluß, zwischen dem Schweißdraht 13 und einer Nahtflanke 34 des Werkstückes 16 auftritt. Diese Widerstandsänderung wird derartig erkannt, daß zwischen dem Schweißdraht 13 und dem Werkstück 16 eine entsprechende Energie bzw. Leistung angelegt wird, sodaß beim Berühren des Schweißdrahtes 13 am Werkstück 16 eine Energieänderung, insbesondere eine Spannungsänderung und/oder Stromänderung, eintritt, welche von der Steuervorrichtung 4 erkannt wird.

Anschließend wird der Schweißbrenner 10 mit dem Schweißdraht 13 in entgegengesetzter Richtung bis zum Auftreten einer weiteren Widerstandsänderung, insbesondere eines weiteren Kurzschlusses, zwischen dem Schweißdraht 13 und einer weiteren Nahtflanke 35 bewegt, wie dies mit strichlierten Pfeilen in Fig. 2 angedeutet ist. Nach der ersten Widerstandsänderung wird von der Robotersteuerung 30 eine Wegmessung gestartet, sodaß nach Eintritt einer weiteren Widerstandsänderung anschließend von einer von der Robotersteuerung durch Auswertung des Verschiebungsweges bzw. der Wegmessung ein Nahtmittel berechnet werden kann, worauf von dem Roboter der Schweißbrenner 10 bzw. der Schweißdraht 13 auf die neu berechneten Koordinaten der Nahtmitte der Naht 32 positioniert wird und ein Schweißprozeß gestartet werden kann. Dabei ist es jedoch auch möglich, daß die Wegmessung über die Zeitdauer des Verfahrbewegung bei bekannter Verfahrgeschwindigkeit durchgeführt wird.

Grundsätzlich kann zu dem Abgleichverfahren erwähnt werden, daß eine Mitte zwischen zwei Nahtflanken 34, 35 einer Naht über mechanische Verstellung des Roboters bzw. des Roboterkopfes 31 ermittelt und berechnet wird, sodaß anschließend ein Schweißprozeß über den Roboter durchgeführt wird, wobei der weitere Nahtverlauf, schematisch mit einem Pfeil 36 angedeutet, durch die Programmierung des Roboters bzw. der Robotersteuerung 32 vorgegeben wird.

Wird bei einem derartigen Aufbau, wie er in Fig. 2 dargestellt ist, jedoch ein aus dem Stand der Technik bekanntes Schweißgerät 1 eingesetzt, so würde bei der ersten Widerstandsänderung zwischen dem Schweißdraht 13 und dem Werkstück 16 von der Steuervorrichtung 4 dies als Kurzschluß erkannt und ein Zündverfahren für die Zündung des Lichtbogens 15 eingeleitet, sodaß eine Abschmelzung des Schweißdrahtes 13 zustande kommen würde, wodurch es nicht mehr möglich wäre, eine exakte Mitte der Naht 32 zu ermitteln.

Bei dem erfindungsgemäßen Schweißgerät 1 ist nunmehr vorgesehen, daß eine derartiges Abgleichverfahren mit dem Leistungsteil 3 des Schweißgerätes 1 ohne zusätzliche Geräte oder Komponenten durchführbar ist und nicht, wie aus dem Stand der Technik bekannt, dazu notwendige Zusatzgeräte bzw. Zusatzkomponenten, wie beispielsweise eine Hilfsstromquelle, verwendet bzw. benötigt werden.

Dazu wird vom Schweißer bzw. Benutzer über die Ein und/oder Ausgabevorrichtung 22 eine zusätzliche Funktion, insbesondere die Funktion Positionssuchen, eingestellt, wobei dieser die weiteren Schweißparameter für den durchzuführenden Schweißprozeß, beispielsweise die Stromhöhe, die Drahtvorschubgeschwindigkeit, das Gasgemisch usw., an der Ein und/oder Ausgabevorrichtung 22 ebenfalls einstellt. Dabei ist es möglich, daß am Schweißgerät 1 oder an der Stromquelle 2, insbesondere an der Ein- und/oder Ausgabevorrichtung 22, die Funktion "Positionssuche" zur Ansteuerung der Stromquelle 2 bzw. des Leistungsteils 3 des Schweißgerätes 1 zur Abgabe einer minimierten Ausgangsleistung bzw. Schweißleistung einstellbar ist, mit der beispielsweise bei Auftreten einer Widerstandsänderung bzw. einem Kurzschluß zwischen dem Schweißdraht 13 und dem Werkstück 16 keine Zündung eines Lichtbogens 15 erfolgt.

Aufgrund der Auswahl Positionssuchen werden die weiteren vom Benutzer eingestellten Schweißparameter zur Bildung einer entsprechend hohen Ausgangsleistung des Leistungsteils 3 für einen Schweißprozeß gespeichert, wobei jedoch die Stromquelle 2 bzw. das Leistungsteil 3 des Schweißgerätes 1 von der Steuervorrichtung 4 derart angesteuert wird, daß bei Auftreten einer Widerstandsänderung zwischen dem Schweißdraht 13 und dem Werkstück 16 eine minimale Ausgangsleistung geliefert wird oder das Leistungsteil 3 abgeschaltet wird.

Dadurch wird erreicht, daß bei Auftreten eines Kurzschlusses eine Zündung des Lichtbogens 15 unterbunden bzw. verhindert wird. Dies ist insofern notwendig, da sämtliche aus dem Stand der Technik bekannte Schweißgeräte 1 bei Auftreten einer entsprechenden Widerstandsänderung, welcher einem Kurzschluß zwischen dem Schweißdraht 13 und dem Werkstück 16 gleich kommt, von den Leistungsteilen 3 der Schweißgeräte 1 versuchen, diesen entstandenen Kurzschluß zu beseitigen und somit eine wesentliche Stromerhöhung durchzuführen.

Wird jedoch gerade das Abgleichverfahren für die Positionierung des Schweißbrenners 10 in der Nahtmitte durchgeführt, so wird der Schweißdraht 13 im Endbereich abgeschmolzen, sodaß unterschiedliche Abstände des Schweißdrahtes 13 zur Werkstückoberfläche entstehen und somit eine Ermittlung bzw. Berechnung der Nahtmitte nicht mehr möglich ist. Durch das erfindungsgemäße Schweißgerät 1 bzw. der entsprechenden Ansteuerung des Leistungsteils 3 des Schweißgerätes 1 wird nunmehr erreicht, daß das zuvor beschriebene Abgleichverfahren mit dem Leistungsteil 3 des Schweißgerätes 1 durchgeführt werden kann, da durch entsprechende Reduzierung der Ausgangsleistung beim mechanischen Berühren der Werkstückoberfläche, also einem Kurzschluß, eine Zündung des Lichtbogens 15 verhindert wird.

Dadurch ergibt sich der wesentliche Vorteil, daß keine zusätzlichen Hilfsstromquellen oder andere Komponenten mehr benötigt werden, da die Ansteuerung des Leistungsteils 3 durch ein entsprechendes Ansteuerverfahren, welches in einem Speicher der Steuervorrichtung 4 hinterlegt ist, durchgeführt wird und somit mit dem Leistungsteil 3 des Schweißgerätes 1 das Abgleichverfahren und ein Schweißprozeß durchführbar ist. Damit können sämtliche Schweißgeräte 1 mit einer derartigen erfindungsgemäßen Lösung für Roboteranwendungen eingesetzt werden, ohne daß dabei zusätzliche hardwaremäßige Nachrüstungen oder Umbauarbeiten erforderlich sind.

Die Erkennung bzw. Auswertung einer Widerstandsänderung zwischen dem Schweißdraht 13 und Werkstück 16 kann auf unterschiedliche Weise erfolgen. Dabei kann eine Überwachung der Spannung oder des Stromes an den Ausgangsklemmen 27, 28 erfolgen, oder es können auch Referenzwerte für Spannung und Strom, also für eine Widerstandsberechnung, hinterlegt werden, so daß entsprechend dem festgelegten Überwachungsverfahren eine Erkennung möglich ist. Auf diese Funktionen wird nicht mehr näher eingegangen, da in jedem Schweißgerät 1 bereits derartige Überwachungsverfahren für den Schweißprozeß vorhanden sind und somit beispielsweise durch einen einfachen Soll/Ist Vergleich des Stromes und/oder der Spannung die Widerstandsänderung von der Steuervorrichtung 4 erkannt werden kann, d.h., daß bei Aktivieren des Schweißgerätes 1 oder des Leistungsteils 3 eine Leerlaufspannung an den Schweißdraht 13 angelegt wird, worauf beim Auftreten einer Widerstandsänderung, also eines Kurzschlusses, das Leistungsteil 3 derart angesteuert wird, daß sich eine minimale Ausgangsleistung an den Ausgangsklemmen 27, 28 einstellt, die eine Zündung bzw. eine Bildung eines Lichtbogens 15 nicht zuläßt bzw. durch Abschalten des Leistungsteils 3 wiederum eine Lichtbogenbildung unterbunden bzw. verhindert wird. Dabei ist es auch möglich, daß ein entsprechendes Ansteuerverfahren für das Leistungsteil 3 durchgeführt wird, bei dem das Leistungsteil 3 eine derartige Leistung bzw. Ausgangsleistung an die Ausgangsklemmen 27, 28 liefert, daß keine Zündung des Lichtbogens 15 erfolgen kann.

Durch eine derartige Ansteuermöglichkeit des Leistungsteils 3 des Schweißgerätes 1 ist es somit möglich, beispielsweise nach dem Übersenden eines Startsignals an die Robotersteuerung 30 das Abgleichverfahren durchzuführen. Dabei wird von der Robotersteuerung 30 bzw. vom Roboter der zuvor beschriebene mechanische Abgleich durch Bewegung des Schweißbrenners 10 in Richtung der Nahtflanken 34 oder 35 eingeleitet, wobei bei der ersten Widerstandsänderung ein weiteres Signal von der Steuervorrichtung 4 an die Robotersteuerung 30 übersandt wird, worauf eine Richtungsumkehr der Bewegung des Schweißbrenners 10 eingeleitet wird. Ist das Abgleichverfahren beendet, so wird von der Robotersteuerung 30 ein entsprechendes Signal an die Steuervorrichtung 4 des Schweißgerätes 1 übersandt, sodaß bei einer neuerlichen Widerstandsänderung, insbesondere einem Kurzschluß, der Schweißprozeß mit den vom Benutzer eingestellten Schweißparametern gestartet werden kann.

Selbstverständlich ist es möglich, daß für den Start eines Schweißprozesses nicht nur eine Kontaktzündung eingesetzt werden kann, sondern daß eine Hochfrequenzzündung ebenfalls möglich ist. Dabei ist es jedoch erforderlich, daß ein Startsignal von der Robotersteuerung 30 an die Steuervorrichtung 4 übersandt wird, sodaß ein definierter Schweißprozeßstart an einer definierten Position der Naht 32 bzw. des Werkstückes 16 erfolgt, sodaß nach der Durchführung des Abgleichverfahrens die Steuervorrichtung 4 das Leistungsteil 3 mit den vom Schweißer bzw. vom Benutzer voreingestellten Schweißparametern zur Erhöhung der Ausgangsleistung für einen Schweißprozeß ansteuert.

Selbstverständlich ist es möglich, daß durch eine derartige Ausbildung bzw. Ansteuerung des Leistungsteils 3 des Schweißgerätes 1 auch weitere Verfahren, bei denen kein Lichtbogen 15 gezündet werden darf, durchgeführt werden können. Dazu ist es möglich, daß eine Konturerkennung des Werkstückes 16 eine Höhenregelung des Schweißdrahtes 13 von der Oberfläche des Werkstückes 16 durchgeführt wird. Es ist auch möglich, daß von der Steuervorrichtung 4 die Berechnungen durchgeführt werden, wobei anschließend die Ergebnisse für die Positionierung des Schweißbrenners 10 an die Robotersteuerung 30 übergeben werden. Dies ist insofern möglich, da die Laufzeit zwischen zwei Widerstandsänderungen und bei einer vorgegebenen Robotergeschwindigkeit errechnet werden kann.

Wie besser aus Fig. 3 ersichtlich ist, wird das Schweißgerät 1 aus einzelnen Komponenten gebildet, wobei der Übersicht halber nur die wesentlichen Elemente in Form eines Blockes dargestellt sind.

Dabei ist das Schweißgerät 1 über Versorgungsleitungen 36, 37 an ein Versorgungsnetz 38 angeschlossen. Über die Versorgungsleitungen 36, 37 wird eine Gleichrichterbrücke 39 mit Energie versorgt, wobei die Gleichrichterbrücke 39 eine Gleichrichtung der von dem Versorgungsnetz 38 gelieferten Wechselspannung durchführt. Mit der Gleichrichterbrücke 39 ist das Leistungsteil 3 verbunden, wobei das Leistungsteil 3 beispielsweise durch eine Brückenschaltung und/oder einem Hoch- oder Tiefsetzsteller gebildet werden kann. Im Leistungsteil 3 erfolgt eine entsprechende Energieumformung der von der Gleichrichterbrücke 39 gelieferten Gleichspannung.

An dem Leistungsteil 3 ist ein Transformator 40 angeschlossen, sodaß eine galvanische Trennung, insbesondere einer Primärseite 41 und einer Sekundärseite 42, für den Aufbau des Schweißgerätes 1 erzielt wird. Dabei sind die zuvor beschriebenen Elemente bzw. Komponenten auf der Primärseite 41 des Transformators 40 angeordnet. Auf der Sekundärseite 42 des Transformators 40 können beliebige aus dem Stand der Technik bekannte Schaltungskomponenten angeschlossen werden. Bei dem dargestellten Ausführungsbeispiel wird an der Sekundärseite 42 des Transformators 40 eine weitere Gleichrichterbrücke 43 angeordnet, an die über Leitungen 44, 45 die Ausgangsklemmen 27, 28 angeschlossen sind. Dabei wird in der Leitung 44 eine Drossel 46 sowie eine Meßvorrichtung 47 für die Ermittlung des Stromes und der Spannung angeordnet, wobei die Meßvorrichtung 47 durch einen Stromsensor 48 für die Erfassung des Stromes gebildet wird.

Damit der Strom und die Spannung am Ausgang der Ausgangsklemmen 27, 28 in die Prozeßregelung bzw. Prozeßsteuerung eingebunden werden können, ist die Steuervorrichtung 4 des Schweißgerätes 1 über Leitungen 49 bis 52 mit den Leitungen 44, 45 verbunden, wobei die Leitungen 49, 50 für den Strom-Istwert und die Leitungen 51, 52 für den Spannungs-Istwert zuständig sind. Weiters sind zwischen den Ausgangsklemmen 27, 28 Entstör- und/oder Ableitkondensatoren 53, 54 angeordnet, sodaß an den Ausgangsklemmen 27, 28 eine Gleichspannung für den Schweißprozeß entnommen werden kann. Die in Serie geschalteten Entstörund/oder Ableitkondensatoren 53, 54 weisen dabei eine geringe Kapazität auf und es ist möglich, daß der Mittelpunkt der beiden Entstör- und/oder Ableitkondensatoren 53, 54 an einem Potential des Schweißgerätes 1, insbesondere an dem Erdpotential, anliegt bzw. mit diesem verbunden ist. Zur Durchführung eines Schweißprozesses ist der Schweißbrenner 10 über die Schweißleitung 17 mit der Ausgangsklemme 27 sowie das Werkstück 16 über die Versorgungsleitung 18 mit dem Schweißgerät 1 verbunden, wie durch die Zusammenschau der Fig. 1 bis 3 ersichtlich ist.

Die von der Gleichrichterbrücke 39 gelieferte Gleichspannung wird im Leistungsteil 3 zerhackt und somit ist eine Energieübertragung über den Transformator 40 möglich. Zur Ansteuerung des Leistungsteiles 3 ist dieser über eine Leitung 55 mit der Steuervorrichtung 4 verbunden. Hierzu wird erwähnt, daß weitere Baugruppen bzw. Schaltungselemente, wie beispielsweise eine Kurzschlußerkennung usw., noch hinzugefügt werden können. Diese sind der Übersicht halber nicht dargestellt. Die einzelnen Verbindungen zwischen den Baugruppen sind nur schematisch angedeutet.

Die Energieversorgung eines Schweißgerätes 1 für einen Schweißprozeß bzw. zur Versorgung des Lichtbogens 15 erfolgt derartig, daß von der Steuervorrichtung 4 entsprechende Steuerimpulse an das Leistungsteil 3 übersandt werden, sodaß von dem Leistungsteil 3 die von der Gleichrichterbrücke 39 gelieferte Energie durch Zerhacken von einer durch eine Brückenschaltung erzeugten Gleichspannung in einzelne Impulse an den Transformator 40 weitergeleitet wird. Dadurch ist die Übertragung einer gewünschten Energiemenge auf die Sekundärseite 42 möglich. Auf der Sekundärseite 42 werden die gelieferten Impulse, insbesondere in Form einer Wechselspannung, wieder über die Gleichrichterbrücke 43 gleichgerichtet und anschließend an die Ausgangsklemmen 27, 28 bzw. an den Schweißbrenner 10 angelegt, wobei gleichzeitig die Entstör- und/oder Ableitkondensatoren 53, 54 geladen bzw. versorgt werden. Eine derartige Energieversorgung bzw. ein derartiger Schaltungsaufbau wird beispielsweise bei MIG/MAG-Schweißgeräten verwendet.
Damit eine entsprechende Steuerung des Leistungsteils 3 in Abhängigkeit des Schweißprozeßzustandes durchgeführt werden kann, werden über die Leitungen 49 bis 52 die Strom-Istwerte und die Spannungs-Istwerte ermittelt und an die Steuervorrichtung 4 weitergeleitet, d.h., daß bei einer auftretenden Widerstandsänderung bzw. einem Kurzschluß zwischen dem Schweißdraht 13 und dem Werkstück 16 dieser durch Einbruch der Spannung bzw. durch einen entsprechenden Stromfluß erkannt wird, worauf von der Steuervorrichtung 4 eine Änderung der Ansteuerung des Leistungsteils 3 zur Lösung des Kurzschlusses durchgeführt wird. Dabei werden von der Steuervorrichtung 4 die Steuerimpulse, insbesondere die Pulsweite für die Brückenschaltung im Leistungsteil 3, erhöht, sodaß ein sehr hoher Strom an die Ausgangsklemmen 27,28 geliefert wird und somit der Kurzschluß aufgelöst wird.

Damit nunmehr mit dem Schweißgerät 1, wie zuvor beschrieben, ein Verfahren zum Positionieren eines Schweißbrenners 10 bzw. eines Schweißdrahtes 13 im Mittel einer Naht durchgeführt werden kann, ist es erforderlich, daß eine entsprechende Ansteuerung des Leistungsteils 3, welcher auch die Leistung bzw. die Energie für den Schweißprozeß liefert, von der Steuervorrichtung 4 durchgeführt wird. Würde nämlich ein zum Stand der Technik zählendes Schweißgerät 1 verwendet, so würde, wie zuvor beschrieben, beim Auftreten einer Widerstandsänderung bzw. eines Kurzschlusses die Pulsweite für die Brückenschaltung im Leistungsteil 3, derartig erhöht, daß ein sehr hoher Strom geliefert wird, um den Kurzschluß zu beheben bzw. wäre die Pulsweite im Leerlauf derart eingestellt, daß eine entsprechende Leistung zur Verfügung stehen würde. Somit wäre bei diesem Schweißgerät die Ansteuerung des Leistungsteils bereits im Leerlauf mit einer entsprechenden Pulsweite geschehen, sodaß bei einem Kurzschluß eine Lichtbogenbildung nicht unterbunden bzw. verhindert werden könnte. Weiters ist es aus dem Stand der Technik bekannt, daß für die Durchführung eines solchen Verfahrens die Schweißgeräte eine weitere Stromquelle mit einer geringen Leistung verwenden und somit das Leistungsteil 3 nicht eingesetzt wird.

Bei dem erfindungsgemäßen Schweißgerät 1 wird für die Durchführung des Verfahrens zum Positionieren des Schweißbrenners 10 bzw. des Schweißdrahtes 13 das Leistungsteil 3 des Schweißgerätes 1 verwendet, wobei durch Auswahl einer Steuerfunktion, insbesondere der Funktion Positionssuchen, die Ausgangsklemmen 27, 28 bzw. die Entstör- und/oder Ableitkondensatoren 53, 54, die zwischen den Ausgangsklemmen 27, 28 des Schweißgerätes 1 geschaltet werden, mit derartigen Impulsen von dem Leistungsteil 3, welches auch die Leistung für den Schweißprozeß liefert, angesteuert bzw. geladen werden, daß bei einer Widerstandsänderung, insbesondere dem Auftritt des Kurzschlusses, zwischen dem Schweißdraht 13 und dem Werkstück 16 eine Zündung des Lichtbogens 15 unterbunden bzw. verhindert wird oder das Leistungsteil 3 des Schweißgerätes 1 bei der Widerstandsänderung bzw. bei einem Kurzschluß abgeschaltet wird, wobei hierzu eine sehr rasche Kurzschlußerkennung benötigt wird, sodaß unmittelbar nach Erkennen einer Widerstandsänderung bzw. eines Kurzschlusses das Leistungsteil 3 von dem Transformator 40 weggeschaltet wird bzw. die Pulsweite auf Null gesetzt wird. Dabei ist es jedoch notwendig, daß für das Abgleichverfahren das Abschalten des Leistungsteils 3 über eine gewisse Zeitdauer erfolgt, sodaß für den weiteren benötigten Kurzschluß zur Auffindung der Nahtmitte wiederum eine Kurzschlußerkennung durchgeführt werden kann.

Durch die Auswahl der Funktion Positionssuchen werden von der Steuervorrichtung 4 die Steuerimpulse, insbesondere die Pulsweite, für das Leistungsteil 3 derart verringert, daß die durch die Bauelemente auf der Sekundärseite 42 auftretenden Verlustleistungen zumindest kompensiert werden, d.h., daß von dem Leistungsteil 3 soviel Energie bzw. Leistung geliefert wird, daß die Verluste ausgeglichen bzw. eine geringfügige Ladung der Entstör- und/oder Ableitkondensatoren 53, 54 erfolgt. Dadurch wird erreicht, daß der Ladezustand der Entstörund/oder Ableitkondensatoren 53, 54 aufrecht erhalten bleibt und somit eine Widerstandsänderung bzw. ein Kurzschluß erkannt werden kann, da in den Entstör- und/oder Ableitungskondensatoren 53, 54 eine entsprechende Energiemenge bzw. Leistung geladen ist und somit durch eine Widerstandsänderung diese Leistung bzw. die Leistung des Leistungsteils 3 an den Schweißbrenner 10 weitergeleitet wird. Da jedoch das Leistungsteil 3 nur eine geringe Leistung für das Aufrechterhalten des Ladezustandes zur Verfügung stellt, kann es zu keiner Zündung eines Lichtbogens 15 bei der Berührung des Schweißdrahtes 13 am Werkstück 16 bzw. beim Lösen des Schweißdrahtes 13 vom Werkstück 16 kommen, wodurch das interne Leistungsteil 3 des Schweißgerätes 1 für die Durchführung eines derartigen Verfahrens zum Positionieren des Schweißbrenners 10 verwendet werden kann.

Damit jedoch ein entsprechendes mechanisches Abgleichverfahren, wie dies bereits zuvor beschrieben wurde und aus dem Stand der Technik bekannt ist, durchgeführt werden kann, ist ein bidirektionaler Datenaustausch zwischen der Steuervorrichtung 4 und der Robotersteuerung 30 notwendig, da vom Schweißgerät 1, insbesondere der Steuervorrichtung 4, die Widerstandsänderung bzw. die Kurzschlußerkennung für die Richtungsänderung der Schweißbrennerbewegung bzw. für die Beendigung des Abgleichverfahrens notwendig ist. Die Robotersteuerung 30 hingegen muß der Steuervorrichtung 4 mitteilen, wenn ein Schweißprozeß gestartet wird bzw. das Abgleichverfahren beendet ist, sodaß von der Steuervorrichtung 4 für die Zündung des Lichtbogens 15 bzw. für die Energieversorgung des Schweißprozesses die Impulse bzw. die Ausgangsleistung entsprechend erhöht, d.h., daß die Pulsweite zur Bildung einer hohen Ausgangsleistung entsprechend vergrößert wird und somit die Ansteuerung des Leistungsteils 3 für einen Schweißprozeß durchgeführt werden kann.

Nachdem das Abgleichverfahren und der anschließende Schweißprozeß durchgeführt wurde, wird von der Steuervorrichtung 4 eine Drahtüberprüfung durchgeführt. Dabei wird nach Beendigung des Schweißprozesses nach Ablauf einer voreinstellbaren Zeitdauer das Leistungsteil 3 wie für das Abgleichverfahren angesteuert, d.h., daß die Leistung bzw. Ausgangsleistung des Leistungsteils 3 soweit herunter gefahren wird, daß die Verlustleistungen der Bauelemente aufgehoben werden und nur eine geringe Ladung der Entstör- und/oder Ableitkondensatoren 53, 54 erfolgt, sodaß eine Widerstandsänderung bzw. ein Kurzschluß des Schweißdrahtes 13 mit dem Werkstück 16 ohne Bildung bzw. Zündung eines Lichtbogens 15 sicher durchgeführt werden kann. Damit kann nunmehr von der Steuervorrichtung 4 erkannt werden, ob der Schweißdraht 13 nach Beendigung des Schweißprozesses mit der Schweißraupe verschmolzen ist oder nicht. Dies kann passieren, da aufgrund der Trägheit des Drahtvorschubgerätes 11 der Schweißdraht 13 nach Beendigung des Schweißprozesses noch weiterbefördert werden kann bzw. durch eine Roboterbewegung der Schweißdraht 13 in das Schmelzbad eingetaucht werden kann, sodaß ein Ankleben des Schweißdrahtes 13 an das sich verhärtende Schmelzbad der Schweißraupe einen Kurzschluß bilden kann.

Die Erkennung erfolgt dabei derartig, daß die Leerlaufspannung an den Schweißdraht 13 über eine gewisse voreinstellbare Zeitdauer angelegt wird. Tritt dabei ein Stromfluß auf, d.h., daß der Schweißdraht 13 mit der Schweißraupe verschmolzen ist, so bricht die Leerlaufspannung aufgrund des Kurzschlusses zusammen, sodaß die Steuervorrichtung 4 dies erkennen kann bzw, es kann über die Meßvorrichtung 47 ein Stromfluß erkannt werden, sodaß von dem Schweißgerät 1 eine Fehlermeldung ausgegeben werden kann bzw. ein Signal an die Robotersteuerung 30 für einen Bewegungsstop ausgegeben werden kann.

Zum Lösen dieser Verbindung ist es möglich, daß nach dem Erkennen des Kurzschlusses von der Steuervorrichtung 4 ein entsprechend hoher Strom an den Schweißdraht 13 angelegt wird, sodaß eine Aufschmelzung des Kurzschlusses bzw. der Verbindung erreicht wird bzw. daß der Benutzer den Schweißdraht 13 mechanisch abtrennt. Dazu ist es möglich, daß diese Drahtüberprüfung mehrmals hintereinander durchgeführt wird.

Der wesentliche Vorteil einer Erkennung, ob nach Schweißprozeßende ein Kurzschluß vorhanden ist, liegt darin, daß durch die geringe Ausgangsleistung, wie bei dem Abgleichverfahren, keine Folgeschäden entstehen können. Ein weiterer Vorteil liegt auch darin, daß Personen, die bereits am Schweißbrenner 10 bzw. am Werkstück 16 arbeiten, keiner Gefahr ausgesetzt sind, da die Ansteuerung des Leistungsteils 3 für eine minimale Ausgangsleistung, welche für Menschen nicht gefährlich ist, durchgeführt wird.

Durch diese Ansteuermöglichkeit des Leistungsteils 3 sind weitere Verfahren, bei denen der Schweißdraht 13 ohne Zündung bzw. Bildung eines Lichtbogens 15 mit dem Werkstück 16 kontaktiert werden muß bzw. die Gefahr einer Kontaktierung entsteht, durchführbar. Dabei ist beispielsweise eine Steuerung des Schweißdrahtes 13 für den Austritt aus dem Kontaktrohr möglich, wobei hierzu der Schweißdraht 13 auf das Werkstück 16 aufgefahren wird und anschließend über eine vorgegebene Wegstrecke durch den Drahtvorschub zurück bewegt wird, sodaß der Schweißdraht 13 einen definierten Abstand zur Werkstückoberfläche bildet. Bei einem derartigen Vorgehen muß wiederum sichergestellt sein, daß kein Lichtbogen, welcher den Schweißdraht ab- bzw. aufschmilzt, gebildet wird.

Weiters ist es möglich, daß bei einem Schweißgerät 1 ohne die Entstör- und/oder Ableitkondensatoren 53, 54 das zuvor beschriebene Verfahren ebenfalls eingesetzt wird. Die Ansteuerung des Leistungsteils 3 erfolgt dabei auf die gleiche Weise wie unter Verwendung der Entstör- und/oder Abgleichkondensatoren 53, 54, wobei sich jedoch an den Ausgangsklemmen 27, 28 eine impulsförmige Spannung einstellt, die zeitlich den Ansteuerimpulsen des Leistungsteils 3 entspricht, wobei eine Spannungszeitfläche so gering ist, daß bei einem Kurzschluß keine Zündung des Lichtbogens 15 auftritt.

Die Ermittlung bzw. Erfassung einer Widerstandsänderung bzw. eines Kurzschlusses erfolgt dabei nur während einer Impulsphase bzw. der impulsförmigen Spannung, wobei zwischen den Impulsen die Ermittlung bzw. Erfassung deaktiviert ist. Diese Aktivierung oder Deaktivierung der Ermittlung bzw. Erfassung einer Widerstandsänderung wird von der Steuervorrichtung 4, 5 synchron mit der Ansteuerung des Leistungsteils 3 durchgeführt.

Abschließend sei darauf hingewiesen, daß in den zuvor beschriebenen Ausführungsbeispielen die einzelnen Teile bzw. Bauelemente oder Baugruppen schematisch bzw. vereinfacht dargestellt sind.

### Bezugszeichenaufstellung

- 1: Schweißgerät
- 2: Stromquelle
- 3: Leistungsteil
- 4: Steuervorrichtung
- 5: Umschaltglied

- 6: Steuerventil
- 7: Versorgungsleitung
- 8: Gas
- 9: Gasspeicher
- 10: Schweißbrenner

- 11: Drahtvorschubgerät
- 12: Versorgungsleitung
- 13: Schweißdraht
- 14: Vorratstrommel
- 15: Lichtbogen

- 16: Werkstück
- 17: Schweißleitung
- 18: Schweißleitung
- 19: Kühlkreislauf
- 20: Strömungswächter

- 21: Wasserbehälter
- 22: Ein- und/oder Ausgabevorrichtung
- 23: Schlauchpaket
- 24: Verbindungsvorrichtung
- 25: Zugentlastungsvorrichtung

- 26: Gehäuse
- 27: Ausgangsklemme
- 28: Ausgangsklemme
- 29: Leitung
- 30: Robotersteuerung

- 31: Roboterkopf
- 32: Naht
- 33: Leitungsverbindung
- 34: Nahtflanke
- 35: Nahtflanke

- 36: Versorgungsleitung
- 37: Versorgungsleitung
- 38: Versorgungsnetz
- 39: Gleichrichterbrücke
- 40: Transformator

- 41: Primärseite
- 42: Sekundärseite
- 43: Gleichrichterbrücke
- 44: Leitung
- 45: Leitung

- 46: Drossel
- 47: Meßvorrichtung
- 48: Stromsensor
- 49: Leitung
- 50: Leitung

- 51: Leitung
- 52: Leitung
- 53: Entstör- und/oder Ableitkondensator
- 54: Entstör- und/oder Ableitkondensator
- 55: Leitung

## Patentansprüche

1. Verfahren zum Positionieren eines Schweißbrenners (10) bzw. eines Schweißdrahtes (13) im Mittel eines Schweißnahtsollverlaufes, wobei der Schweißbrenner (10) durch einen Roboterarm auf einer vorgegebenen bzw. programmierten Stellung zwischen zwei Nahtflanken (34, 35) positioniert wird, worauf ein Abgleichverfahren durchgeführt wird, bei dem der Schweißbrenner (10) durch den Roboterarm in eine Richtung bewegt wird, bis ein Kurzschluß zwischen dem Schweißbrenner (10) oder dem Schweißdraht (13) und einer Nahtflanke (34, 35) des Werkstückes (16) auftritt, worauf der Schweißbrenner (10) in entgegengesetzter Richtung bis zum Auftreten eines weiteren Kurzschlusses zwischen dem Schweißbrenner (10) oder dem Schweißdraht (13) und dem Werkstück (16) bzw. einer weiteren Nahtflanke (34, 35) vom Roboterarm bewegt wird, jedoch zwischen Schweißbrenner oder Schweißdraht und dem Werkstück kein Lichtbogen beim Auftreten des Kurzschlusses gezündet wird und anschließend von einer Steuervorrichtung (4) durch Auswertung des Verschiebeweges bzw. des zurückgelegten Weges eine Nahtmitte berechnet wird, auf die der Schweißbrenner (10) oder Schweißdraht (13) durch den Roboterarm positioniert wird, **dadurch gekennzeichnet, daß** das Schweißgerät (1) die Steuervorrichtung (4) und eine Stromquelle (2) mit nur einem Leistungsteil (3) mit Ausgangsklemmen (27, 28) aufweist, wobei durch Auswahl einer Funktion "Positionssuche" die Steuervorrichtung (4) die Leistungsabgabe des Leistungsteiles (3) der Stromquelle (2), welche auch die Leistung für den Schweißprozess liefert, minimiert oder das Leitungsteil (3) abschaltet, so daß durch die Leistungsabgabe an den Ausgangsklemmen (27, 28) *jedoch* eine Widerstandsänderung bei Auftritt eines Kurzschlusses zwischen dem Schweißbrenner (10) oder dem Schweißdraht (13) und dem Werkstück (16) erkannt wird.

2. Verfahren nach Anspruch 1, **dadurch gekennzeichnet, daß** zwischen den Ausgangsklemmen (27, 28) des Leistungsteils (3) Entstör- und/oder Ableitkondensatoren (53, 54) mit Impulsen bzw. einer Ausgangsleistung vom Leistungsteil (3) geladen werden, so daß bei einer Widerstandsänderung, insbesondere dem Auftritt des Kurzschlusses, zwischen dem Schweißdraht (13) und dem Werkstück (16) eine Zündung eines Lichtbogens (15) unterbunden bzw. verhindert wird.

3. Verfahren nach Anspruch 1 oder 2, **dadurch gekennzeichnet, daß** das Leistungsteil (3) nur eine geringe Leistung für ein Aufrechterhalten eines Ladezustandes der Entstörund/oder Ableitkondensatoren (53, 54) zur Verfügung stellt.

4. Verfahren nach einem der vorhergehenden Ansprüche, **dadurch gekennzeichnet, daß** durch Einstellen der Funktion "Positionssuche" die Steuervorrichtung (4) das Leistungsteil (3) derart ansteuert, daß vom Leistungsteil (3) soviel Leistung bzw. Ausgangsleistung an eine Sekundärseite (42) geliefert wird, daß die Verlustleistung der Bauelemente der Sekundärseite (42) kompensiert wird und darüber hinaus eine geringfügige Ladung der Entstör- und/ oder Ableitkondensatoren (53, 54) erfolgt.

5. Verfahren nach einem der vorhergehenden Ansprüche, **dadurch gekennzeichnet, daß** nach Beendigung des Abgleichverfahrens von der Steuervorrichtung (4) die Leistungsabgabe des Leistungsteils (3) entsprechend erhöht wird, insbesondere eine Pulsweite zur Bildung einer hohen Ausgangsleistung entsprechend vergrößert wird und somit die Energieversorgung des Schweißprozesses bzw. die Zündung des Lichtbogens (15) durchgeführt wird.

6. Verfahren nach einem der vorhergehenden Ansprüche, **dadurch gekennzeichnet, daß** nach der Durchführung des Abgleichverfahrens das Leistungsteil (3) von der Steuervorrichtung (4) mit den vom Schweißer bzw. vom Benutzer voreingestellten Schweißparametern angesteuert wird.

7. Verfahren nach einem der vorhergehenden Ansprüche, **dadurch gekennzeichnet, daß** zwischen der Steuervorrichtung (4) und einer Robotersteuerung (30) eines Roboters über eine Leitungsverbindung ein bidirektionaler Datenaustausch durchgeführt wird.

8. Verfahren zum Feststellen eines Kurzschlusses zwischen einem Schweißdraht (13) und einem Werkstück (16) nach Beendigung eines Schweißprozesses, **dadurch gekennzeichnet, daß** das Schweißgerät (1) eine Steuervorrichtung (4) und eine Stromquelle (2) mit nur einem Leistüngsteil (3) aufweist, wobei das Leistungsteil (3) nach Beendigung des Schweißprozesses und Ablauf einer voreinstellbaren Zeitdauer von der Steuervorrichtung (4) derart angesteuert wird, daß die Leistungsabgabe des Leistungsteiles (3) der Stromquelle (2) minimiert wird, wobei bei Auftreten bzw. Erkennen eines Kurzschlusses durch eine Widerstandsänderung zwischen dem Schweißdraht (13) und dem Werkstück (16) eine minimal Ausgangsleistung geliefert wird oder das Leistungsteil (3) abgeschaltet wird und somit eine Zündung des Lichtbogens (15) unterbunden bzw. verhindert wird.

9. Verfahren nach Anspruch 8, **dadurch gekennzeichnet, daß** nach Ablauf einer voreinstellbaren Zeitdauer bei Erkennung eines Kurzschlusses ein erhöhter Strom zur Lösung des Kurzschlusses ausgesandt wird oder von dem Schweißgerät (1) eine Fehlermeldung bzw. ein Signal für einen Bewegungsstop an die Robotersteuerung (30) ausgegeben wird.

10. Schweißgerät (1) oder Schweißanlage für eine Roboteranwendung, bestehend aus einer Stromquelle (2) bzw. einem Leistungsteil (3) und einem über ein Schlauchpaket (23) angeschlossenen Schweißbrenner (10), welcher an einem Roboterkopf (31) bzw. an einem Roboterarm zur Durchführung des Verfahrens nach einem oder mehreren der Ansprüche 1 bis 7 bzw. 8 bis 9 angeordnet ist, **dadurch gekennzeichnet, daß** das Schweißgerät (1) eine Steuervorrichtung (4) und die Stromquelle (2) mit nur einem Leistungsteil (3) mit Ausgangklemmen (27, 28) aufweist, so daß durch Auswahl einer Funktion "Positionssuche" die Steuervorrichtung (4) die Leistungsabgabe des Leistungsteiles (3) der Stromquelle (2), welche auch die Leistung für den Schweißprozess liefert, minimiert oder das Leitungsteil abschaltet, daß durch die Leistungsabgabe an den Ausgangsklemmen (27, 28) jedoch eine Widerstandsänderung bei Auftritt eines Kurzschlusses zwischen dem Schweißbrenner (10) oder dem Schweißdraht (13) und dem Werkstück (16) erkannt wird.

11. Schweißgerät (1) der Schweißanlage nach Anspruch 10, **dadurch gekennzeichnet, daß** auf einer Sekundärseite (42) des Schweißgerätes (1) bzw. der Stromquelle (2), insbesondere mit den Ausgangsklemmen (27, 28) verbunden, Entstör- und/oder Ableitkondensatoren (53, 54) angeordnet sind.

## Claims

1. Method of positioning a welding torch (10) and a welding wire (13) at the centre of a desired run of welding seam, in which the welding torch (10) is positioned by means of a robot arm on a predetermined or programmed position between two seam edges (34, 35) and an alignment process is run whereby the robot arm moves the welding torch (10) in one direction until a short circuit occurs between the welding torch (10) or the welding wire (13) and a seam edge (34, 35) of the workpiece (16), and the welding torch (10) is then displaced in the opposite direction by the robot arm until another short circuit occurs between the welding torch (10) or the welding wire (13) and the workpiece (16) and another seam edge (34, 35), after which a control system (4) evaluates the displacement path or the distance travelled in order to calculate a seam centre on which the welding torch (10) or welding wire (13) is positioned by the robot arm, **characterised in that** the welding device (1) has a control system (4) and a current source (2) with only one power component (3) with output terminals (27, 28) and when a "Find position" function is selected, the control system (4) reduces to a minimum the power output of the power component (3) of the current source (2), which also supplies the power for the welding process, or switches the power component (3) off, so that a change in resistance is *nevertheless* still detected when a short circuit occurs between the welding torch (10) or welding wire (13) and the workpiece (16) due to the power applied to the output terminals (27, 28).

2. Method as claimed in claim 1, **characterised in that** suppression and/or discharge capacitors (53, 54) between the output terminals (27, 28) of the power component (3) are charged by pulses or an output power from the power component (3) so that when there is a change in resistance between the welding wire (13) and the workpiece (16), ignition of an arc (15) is prevented or suppressed, particularly if a short circuit occurs.

3. Method as claimed in claim 1 or 2, **characterised in that** the power component (3) supplies only a low power for keeping the suppression and/or discharge capacitors (53, 54) charged.

4. Method as claimed in one of the preceding claims, **characterised in that** by setting the "Find position" function, the control system (4) activates the power component (3) in such a way that the power component (3) supplies sufficient power or output power on a secondary side (42) to compensate for the lost power of the components of the secondary side (42) and additionally apply a slight charge to the suppression and/or discharge capacitors (53, 54).

5. Method as claimed in one of the preceding claims, **characterised in that** when the alignment process has been completed by the control system (4), the power output of the power component (3) is duly increased, in particular a pulse width is duly increased, in order to generate a high output power and hence supply the energy for the welding process and to ignite the arc (15).

6. Method as claimed in one of the preceding claims, **characterised in that** when the alignment process has been run, the power component (3) is activated by the control system (4) with the welding parameters previously entered by the welder or user.

7. Method as claimed in one of the preceding claims, **characterised in that** a two-way data transfer is operated between the control system (4) and a robot controller (30) of a robot via a line connection.

8. Method of detecting a short circuit between a welding wire (13) and a workpiece (16) on completion of a welding process, **characterised in that** the welding device (1) has a control system (4) and a current source (2) with only one power component (3), whereby on completion of the welding process and after a predeterminable time has elapsed, the power component (3) is activated by the control system (4) in such a way that the power output of the power component (3) of the current source (2) is reduced to a minimum and when a short circuit occurs or is detected due to a change in resistance between the welding wire (13) and the workpiece (16), a minimal output power is supplied or the power component (3) is switched off, thereby preventing or suppressing ignition of an arc (15).

9. Method as claimed in claim 8, **characterised in that**, if a short circuit is detected after a predeterminable time has elapsed, an increased current is despatched in order to resolve the short circuit or an error indication or signal is sent from the welding device (1) to the robot controller (30) to halt displacement.

10. Welding device (1) or welding system for a robot application, consisting of a current source (2) and a power component (3) and, connected via a hose pack (23), a welding torch (10) disposed on a robot head (31) or a robot arm for implementing the method as claimed in one or more of claims 1 to 7 and 8 to 9, **characterised in that** the welding device (1) has a control system (4) and a current source (2) with only one power component (3) with output terminals (27, 28), so that when a "Find position" function is selected, the control system (4) reduces to a minimum the power output of the power component (3) of the current source (2), which also supplies the power for the welding process, or switches the power component off, but a change in resistance is still detected when a short circuit occurs between the welding torch (10) or the welding wire (13) and the workpiece (16) due to the power applied to the output terminals (27, 28).

11. Welding device (1) of the welding system as claimed in claim 10, **characterised in that** suppression and/or discharge capacitors (53, 54) are provided on a secondary side (42) of the welding device (1) and the current source (2) and are connected in particular to the output terminals (27, 28).

## Revendications

1. Procédé de positionnement d'un chalumeau de soudage (10) respectivement d'un fil d'apport (13) au centre d'un tracé théorique d'un cordon de soudure, où le chalumeau (10) est positionné par un bras de robot à une position prédéterminée respectivement programmée entre deux flancs de cordon (34, 35), à la suite de quoi un procédé d'équilibrage est exécuté, où le chalumeau (10) est déplacé par le bras de robot dans une direction jusqu'à ce qu'il y ait un court-circuit entre le chalumeau (10) ou le fil d'apport (13) et un flanc de cordon (34, 35) de la pièce (16), où le chalumeau (10) est déplacé dans la direction opposée jusqu'à la survenue d'un autre court-circuit entre le chalumeau (10) ou le fil d'apport (13) et la pièce (16) respectivement un autre flanc de cordon (34, 35) par le bras de robot, cependant, entre le chalumeau ou le fil d'apport et la pièce, il n'y a pas d'amorçage d'arc lors de la survenue du court-circuit, et ensuite, par un dispositif de commande (4), en évaluant le chemin de déplacement respectivement le chemin parcouru, un centre de cordon est calculé sur lequel le chalumeau (10) ou le fil d'apport (13) est positionné par le bras de robot, **caractérisé en ce que** l'appareil de soudage (1) présente le dispositif de commande (4) et une source de courant (2) avec seulement une partie de puissance (3) avec des bornes de sortie (27, 28), où par la sélection d'une fonction "recherche de position", le dispositif de commande (4) réduit à un minimum l'émission de puissance de la partie de puissance (3) de la source de courant (2) qui fournit également la puissance pour le processus de soudage ou bien met hors service la partie de puissance (3) de telle sorte que par l'émission de la puissance aux bornes de sortie (27, 28), *cependant* une modification de la résistance est détectée lors de la survenue d'un court-circuit entre le chalumeau de soudage (10) ou le fil d'apport (13) et la pièce (16).

2. Procédé selon la revendication 1, **caractérisé en ce que**, entre les bornes de sortie (27, 28) de la partie de puissance (3), des condensateurs d'antiparasitage et/ou en dérivation (53, 54) sont chargés en impulsions respectivement une puissance de sortie par la partie de puissance (3) de telle sorte que lors d'une modification de la résistance, notamment lors de la survenue du court-circuit, l'amorçage d'un arc (15) est empêché entre le fil d'apport (13) et la pièce (16).

3. Procédé selon la revendication 1 ou 2, **caractérisé en ce que** la partie de puissance (3) met à disposition seulement une puissance réduite pour un maintien d'un état de charge des condensateurs d'antiparasitage et/ou en dérivation (53, 54).

4. Procédé selon l'une des revendications précédentes, **caractérisé en ce que** par le réglage de la fonction "recherche de position", le dispositif de commande (4) commande la partie de puissance (3) de façon que la partie de puissance (3) fournit suffisamment de puissance respectivement de puissance de sortie à un côté secondaire (42) pour que la puissance de perte des composants du côté secondaire (42) soit compensée et que de plus à lieu une charge réduite des condensateurs d'antiparasitage et/ou en dérivation (53, 54).

5. Procédé selon l'une des revendications précédentes, **caractérisé en ce qu'**à la fin du procédé d'équilibrage, par le dispositif de commande (4), l'émission de puissance de la partie de puissance (3) est augmentée d'une manière correspondante, en particulier une largeur d'impulsion pour former une puissance de sortie élevée est agrandie d'une manière correspondante, et par conséquent, l'alimentation en énergie du processus de soudage respectivement l'amorçage de l'arc (15) est effectuée.

6. Procédé selon l'une des revendications précédentes, **caractérisé en ce qu'**après l'exécution du procédé d'équilibrage, la partie de puissance (3) est commandée par le dispositif de commande (4) selon les paramètres de soudage réglés préalablement par le soudeur respectivement utilisateur.

7. Procédé selon l'une des revendications précédentes, **caractérisé en ce qu'**un échange de données bidirectionnel est effectué entre le dispositif de commande (4) et une commande de robot (30) d'un robot par une jonction de circuits.

8. Procédé pour constater un court-circuit entre un fil d'apport (13) et une pièce (16) à la fin d'un processus de soudage, **caractérisé en ce que** l'appareil de soudage (1) présente un dispositif de commande (4) et une source de courant (2) avec seulement une partie de puissance (3), où la partie de puissance (3), après la fin du le processus de soudage et après l'écoulement d'une durée de temps pré-réglable, est commandée par le dispositif de commande (4) de façon que l'émission de puissance de la partie de puissance (3) de la source de courant (2) soit réduite à un minimum, où lors de la survenue respectivement la détection d'un court-circuit par une modification de la résistance entre le fil d'apport (13) et la pièce (16), une puissance de sortie minimale est fournie ou bien la partie de puissance (3) est mise hors service, et par conséquent un amorçage de l'arc (15) est évité respectivement empêché.

9. Procédé selon la revendication 8, **caractérisé en ce qu'**après l'écoulement d'une durée de temps pré-réglable, lors de la détection d'un court-circuit, un plus fort courant est émis pour arrêter le court-circuit, ou bien l'appareil de soudage (1) émet une signalisation d'erreur respectivement un signal pour un arrêt de mouvement à la commande de robot (30).

10. Appareil de soudage (1) ou installation de soudage pour une utilisation à robot, constitué d'une source de courant (2) respectivement d'une partie de puissance (3) et d'un chalumeau (10) relié par un paquet de tuyaux (23), qui est disposé à une tête de robot (31) respectivement à un bras de robot pour l'exécution du procédé selon l'une ou plusieurs des revendications 1 à 7 respectivement 8 à 9, **caractérisé en ce que** l'appareil de soudage (1) présente un dispositif de commande (4) et la source de courant (2) seulement une partie de puissance (3) avec des bornes de sortie (27, 28) de telle sorte que par la sélection d'une fonction "recherche de position", le dispositif de commande (4) réduit à un minimum l'émission de puissance de la partie de puissance (3) de la source de courant (2) qui fournit aussi la puissance pour le processus de soudage ou bien met hors service la partie de puissance, de sorte que par l'émission de la puissance aux bornes de sortie (27, 28), cependant une modification de la résistance est détectée lors de la survenue d'un court-circuit entre le chalumeau de soudage (10) ou le fil d'apport (13) et la pièce (16).

11. Appareil de soudage (1) ou installation de soudage selon la revendication 10, **caractérisé en ce que** sont disposés sur un côté secondaire (42) de l'appareil de soudage (1) respectivement de la source de courant (2) des condensateurs d'antiparasitage et/ou en dérivation (53, 54) connectés notamment aux bornes de sortie (27, 28).
